# EUROPEAN PATENT APPLICATION

(11) **EP 3 968 183 A1**
(43) Date of publication of application: **16.03.2022**
(21) Application number: 20196038.2
(22) Date of filing: 14.09.2020
(51) Int. Cl.: G06F 16/951, G06Q 40/04, G06Q 40/06

(54) **MULTI-THREADED ASSET DATA PROCESSING ARCHITECTURE**

(71) Applicant: Seventy Nine Three Luxembourg S.A., 4972 Dippach (LU)
(72) Inventor: BRANCO, Valérian Viktor Arthur, 4972 Dippach (LU); MATERAZZI, Marco, 4972 Dippach (LU); BROCHIER, Aymeric Maxime, 4972 Dippach (LU); PRUNIER, Alexis Franck, 4972 Dippach (LU)
(74) Representative: Marks & Clerk (Luxembourg) LLP

(57) **Abstract**

A multi-threaded data processing architecture is disclosed for distributing asset-holding instrument data across a network. A database stores data records, each representative of a respective asset-holding instrument and comprising at least a unique instrument identifier and at least one network address associated the instrument. At least one workflow thread instantiates and controls a plurality of data processing threads, comprising data scraping threads for retrieving asset-holding instrument data selected from static, dynamic and/or historical data stored at a network-connected resource corresponding to the network address stored in the data record of a respective asset-holding instrument, electronic mail messages stored at a mail server, a specific page or document stored at the network-connected resource corresponding to the network address stored in the data record of the respective asset-holding instrument, and instrument value data stored in the database. The data processing threads also include regular threads instantiated to process the retrieved asset-holding instrument data, associate the processed data with one or more unique asset-holding instrument identifier(s), and update the respective database data record corresponding to the or each unique asset-holding instrument identifier. At least one client module is authenticated, to which database data records are distributed.

## Description

### Field of the Invention

The present invention relates to data processing techniques applied to asset-holding instruments. In particular, the present invention relates to a multi-threaded data processing architecture, system and method for automating the collating, updating and distribution of asset-holding instrument data.

### Background of the Invention

Like many other forms of digital data at this time, asset-holding instrument data is experiencing such a rapid increase in volume and diversity, as to become highly problematic for analysts to survey comprehensively enough for formulating investment decisions, and this despite technical progress so much in data processing storage and capacity, as in data communication networks.

Exchange-Traded Funds ('ETFs') are a particular type of asset-holding instrument, which hold financial or physical assets (e.g. shares, bonds, currencies, commodities like gold, oil, etc.) and are traded on stock exchanges, under a regulated arbitrage mechanism designed to keep them trading close to their net asset value. The complexity inherent to the composition of such asset-holding instruments, and their rapid proliferation across exchanges, as they currently number tens of thousands at least, render an analysis and selection of candidate instruments for a particular investment objective or strategy particularly difficult, because they all tend to track the same or a highly similar index or benchmark, yet a high dispersion of performance and risk is occurring across instruments overtime.

For example, when observing ETFs with passive exposure to an index, an analyst expects to observe a similar performance as the benchmark which they track and similar levels of volatility after removing their respective management cost. In practice, this rarely happens and analysts witness instead instruments outperforming their benchmark with less volatility, or a drag in performance which is not explained by the deduction of the management cost from the index performance.

Known digital asset-holding instrument management solutions are still essentially manual and ad hoc, which initially involve the periodical and manual acquisition of spreadsheets from one or more asset-holding instrument data vendors, often at a non-trivial cost. With individual subscriptions for subsets of instrument data known to oscillate between €20k and €500k at each data provider, analysts might subscribe to instrument data from one top vendor, and possibly several lower-tier vendors as well for enhanced context data, but do not as a rule subscribe to the entire group of data providers.

The spreadsheet data is then manually validated or 'cleaned' with corroborating or supplementary, qualitative and/or quantitative data acquired from alternate sources, e.g. literature about instruments manually downloaded from their respective issuers' websites, the compliance of which must also be checked against statutory requirements of issuance date, versioning and more. The validated data is then manipulated for analysis over extensive periods, until a selection of candidate instruments can be arrived at.

The sheer volume and replication of data transfers initiated by analysts all downloading the same instrument data and the same corroborating or supplementary, qualitative and/or quantitative data from the same sources, in aggregate form, amounts to significant volumes of bandwidth usage, data storage consumption and data processing cycles, since each analyst must replicate substantially the same data acquisition and cleaning tasks as all others, before being in a position to exercise mental instrument analysis and selection acts.

The manual data sourcing and cleaning aspects are also particularly susceptible to human error, due to the essentially ad hoc nature to these tasks, the sheer volume of data to process, and the restrictive timescale inherent to analyzing instruments data whilst they continue to be traded in parallel, substantially in real-time. Later analyses in the overall workflow are then equally susceptible to accidental bias, due to the restrictive number of data sets acquired and compounding errors introduced at the data validation stage. Ever higher numbers of asset-holding instruments released and traded compound this situation, resulting in a growing lag between the financial industry's capacity to collate and analyze instrument data, and their pace of issuance and trading.

A data processing solution aggregating and distributing validated and precise instrument data is therefore desirable for mitigating at least some of the disadvantages associated with known techniques.

### Summary of the Invention

Aspects of the invention are set out in the accompanying claims, aimed at various embodiments of a data processing architecture, a system and a method for compiling and distributing data of an asset-holding instrument across a network.

In a first aspect, the invention provides a multi-threaded data processing architecture for distributing asset-holding instrument data across a network.

The architecture comprises a database storing a plurality of data records, each data record representative of a respective asset-holding instrument, each data record comprising at least a unique asset-holding instrument identifier and at least one network address associated with the asset-holding instrument, the database further storing a plurality of data structures with values representative of quantitative and/or qualitative characteristics of each asset-holding instrument.

The architecture further comprises at least one workflow thread configured to instantiate and control a plurality of data processing threads.

The plurality of thread comprises data scraping threads instantiated to retrieve asset-holding instrument data selected from (i) static, dynamic and/or historical asset-holding instrument data stored at a network-connected resource corresponding to the network address stored in the data record of a respective asset-holding instrument, (ii) one or more electronic mail messages stored at and downloaded from a network-connected mail server, (iii) a specific page or document stored at the network-connected resource corresponding to the network address stored in the data record of the respective asset-holding instrument, and (iv) instrument value data stored in the database.

The plurality of threads further comprises regular threads instantiated to process the retrieved asset-holding instrument data, associate the processed data with one or more unique asset-holding instrument identifier(s), and update the respective database data record corresponding to the or each unique asset-holding instrument identifier.

The architecture further comprises at least one client module for accessing data records in the database.

In a second aspect, the invention provides a system for distributing asset-holding instrument data.

The system comprises a network of data processing terminals, wherein at least a first terminal stores a database storing a plurality of data records, each data record representative of a respective asset-holding instrument, each data record comprising at least a unique asset-holding instrument identifier and at least one network address associated with the asset-holding instrument, the database further storing a plurality of data structures with values representative of quantitative and/or qualitative characteristics of each asset-holding instrument.

The terminal processes at least one workflow thread configured to instantiate and control a plurality of data processing threads, including data scraping threads instantiated to retrieve asset-holding instrument data and regular threads instantiated to process the retrieved asset-holding instrument data, as described hereinbefore.

At least a remote third terminal processes a client module authenticated at the first terminal to access data records in the database.

In a third aspect, the invention provides a data processing method for distributing asset-holding instrument data across a network. The method comprises steps of storing a database having a plurality of data records, each data record representative of a respective asset-holding instrument, each data record comprising at least a unique asset-holding instrument identifier and at least one network address associated with the asset-holding instrument; storing a plurality of data structures with values representative of quantitative and/or qualitative characteristics of each asset-holding instrument in the database; instantiating and controlling a plurality of data processing threads with a workflow thread; retrieving asset-holding instrument data selected from (i) static, dynamic and/or historical asset-holding instrument data stored at a remote second terminal corresponding to the network address stored in the data record of a respective asset-holding instrument, (ii) one or more electronic mail messages stored at and downloaded from the remote second terminal or another, (iii) a specific page or document stored at the remote second terminal corresponding to the network address stored in the data record of the respective asset-holding instrument, and (iv) instrument value data stored in the database with instantiated data scraping threads; processing the retrieved asset-holding instrument data, associating the processed data with a respective unique asset-holding instrument identifier, and updating the database data record corresponding to the respective unique asset-holding instrument identifier with instantiated regular threads; authenticating access to at least one remote client module ; and distributing data records of the database to the or each authenticated remote client module.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a hardware diagram of a system in a networked environment, configurable according to the invention, including a plurality of data processing terminals segregating as server, client and data source terminals.
Figure 2 is a simplified diagram of a typical hardware architecture of a server terminal shown in Figure 1, including a processor and memory means storing a set of data processing instructions.
Figure 3 is a simplified diagram of a typical hardware architecture of a client terminal shown in Figure 1, including a processor and memory means storing a set of data processing instructions.
Figure 4 is a logical diagram of a data processing architecture implementing the method of the invention, comprising a plurality of data structures including a multithreaded workflow module, a workflow optimization module, a database, an application programmer interface and a client module.
Figure 5 illustrates the system of Figures 1 to 3 configured according to the architecture of Figure 4, wherein the data processing terminals store, process and distribute asset holding instrument data with the plurality of data processing structures.
Figure 6 shows a communications data processing logic of the workflow module shown in Figures 4 and 5, configured to parse and process incoming communications such as emails
Figure 7 shows an online data collection logic of the workflow module shown in Figures 4 and 5, configured to acquire and process raw ETF data published by third party ETF data sources, such as websites of ETF issuers and ETF exchange.
Figure 8 shows an online data address logic of the workflow module shown in Figures 4 and 5, configured to detect and process network addresses of ETF data published by third party ETF data sources, such as websites of ETF issuers and ETF exchange.
Figure 9 shows a static data processing logic of the workflow and workflow optimization modules shown in Figures 4 and 5, configured to process and correct the raw data acquired by the sub-modules shown in Figures 6, 7 and 11, and to update the database with coherent asset holding instrument data.
Figure 10 shows a dynamic data processing logic of the workflow and workflow optimization modules shown in Figures 4 and 5, configured to detect and correct date and/or value incoherence in the raw data acquired by the sub-modules shown in Figures 6 and 7, and to update the database with corrected asset holding instrument data.
Figure 11 shows a document processing logic of the workflow and workflow optimization modules shown in Figures 4 and 5, configured to acquire, parse and archive documents published by third party asset holding instrument data sources, such as websites of ETF issuers and ETF exchange.
Figure 12 shows a compliance-checking logic of the workflow module shown in Figures 4 and 5, configured to audit instrument data stored in the database 401 as a result of the updating activity performed by the logics of Figures 6 to 11.
Figure 13 illustrates multiple data processing threads of the workflow module of Figures 4 and 5 generated by a set of instructions stored and processed by a server terminal of Figures 1 and 2, wherein each thread implements a respective logic as shown in Figures 6 to 12.
Figure 14 is a logical diagram of the contents of the memory means of the server terminal shown in Figures 1 and 2 configured to process the workflow module instantiating the threads shown in Figure 13.
Figure 15 is a logical diagram of the contents of the memory means of the server terminal shown in Figures 1 and 2 and 13 configured to process the workflow optimization module.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

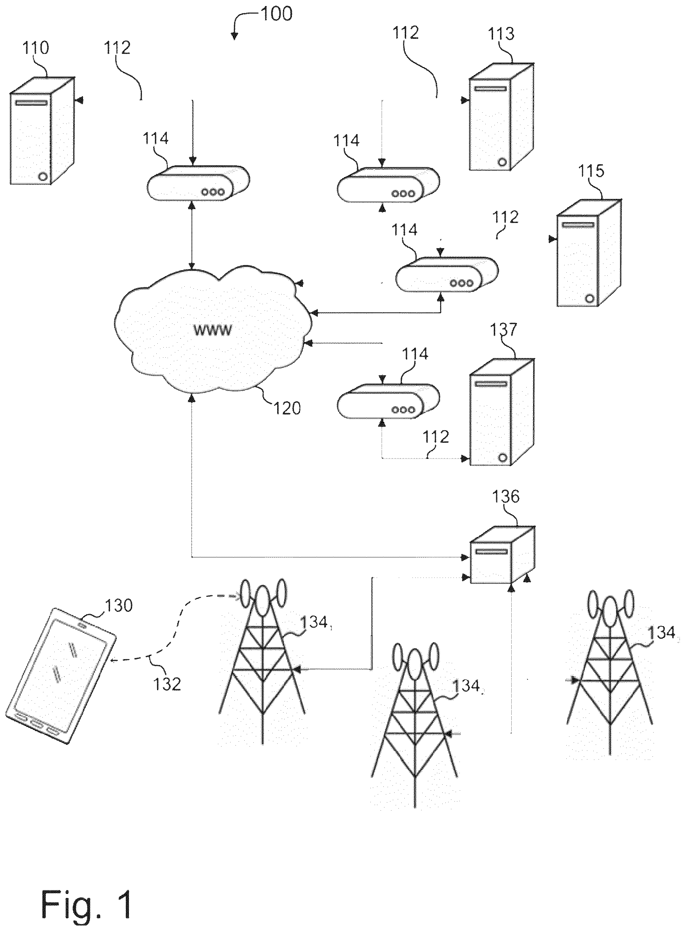

Referring now to the Figures and initially Figures 1 to 3, an example of a system 100 is shown, which is configurable with embodiments of the data processing architecture of the invention. The system 100 includes a plurality of data processing terminals within a networked environment, which may vary in hardware configuration and data processing capacity, ranging from static high-capacity servers for storing, processing and distributing data, to highly-portable smart phones for end users to access distributed instrument data.

In the example, each of data processing terminals 110, 113, 115 is a server computer, and data processing terminal 137 is a personal computer operated by an end user. The servers and the computer each emit and receive data encoded as digital signals over high-bandwidth wired or wireless data connections 112, wherein such signals are relayed respectively to or from the computing device 110, 113, 115 by a local router device 114 implementing a wired local network operating according to the IEEE 802.3-2008 Gigabit Ethernet transmission protocol and, in the case of personal computer 137, a high-bandwidth wireless local network operating according to the IEEE 802.11 Wi-Fi wireless transmission protocol.

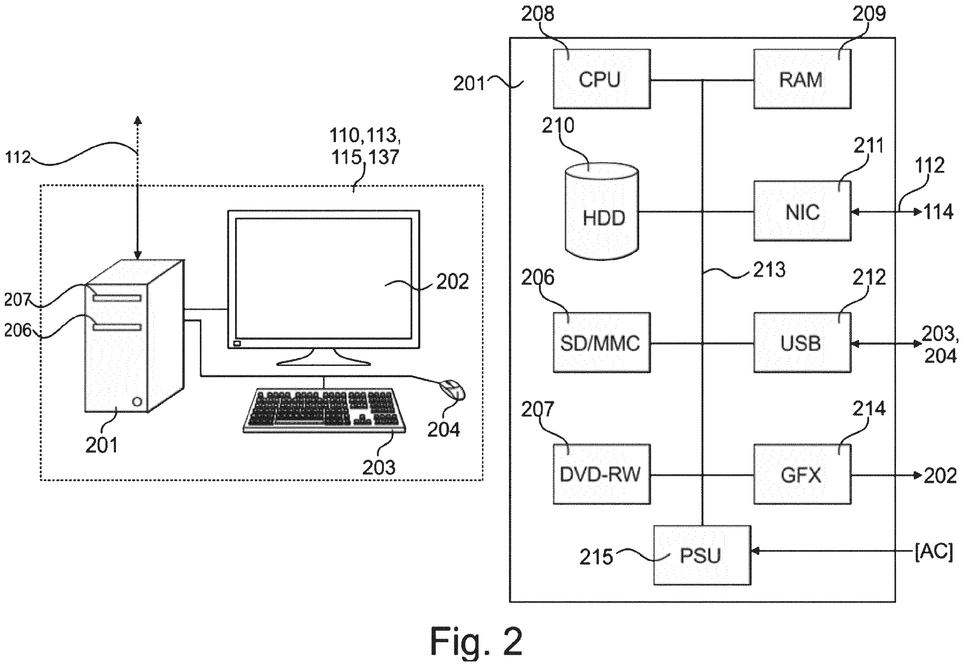

A typical hardware architecture of any of the data processing terminal 110, 113, 115, 137 is shown in Figure 2 in further detail, by way of non-limitative example. The data processing terminal is configured with a data processing unit 201, data outputting means such as video display unit (VDU) 202, data inputting means such as HID devices, commonly a keyboard 203 and a pointing device (mouse) 204, as well as the VDU 202 itself if it is a touch screen display, and data inputting/outputting means such as the wired or wireless network connection 112 to local and wide area networks via the router 114, a magnetic data-carrying medium reader/writer 206 and an optical data-carrying medium reader/writer 207.

Within the data processing unit 201, a central processing unit (CPU) 208 provides task coordination and data processing functionality. Sets of instructions and data for the CPU 208 are stored in memory means 209 and a hard disk storage unit 210 facilitates non-volatile storage of the instructions and the data. A wireless network interface card (NIC) 211 provides the interface to the network connection 112 with the router 114. One or more universal serial bus (USB) input/output interfaces 212 facilitate connection to the keyboard and pointing devices 203, 204.

All of the above components are connected to a data input/output bus 213, to which the magnetic data-carrying medium reader/writer 206 and optical data-carrying medium reader/writer 207 are also connected. A video adapter 214 receives CPU instructions over the bus 213 for outputting processed video data to VDU 202. All the components of data processing unit 201 are powered by a power supply unit 215, which receives electrical power from a local mains power source and transforms same according to component ratings and requirements.

Each router 114 is itself connected to a wide area network, an example of which is the Internet 120, via a conventional ADSL or optical fiber connection and through which digital data may be emitted to and received from remote data processing terminals. Network connectivity and interoperable networking protocols of each data processing terminal allow the terminals to connect to one another and communicate data to and receive data from one another according to certain embodiments the methodology described herein.

In the example still, a data processing terminal 130 is a mobile personal communication device, which emits and receives data, including voice and/or alphanumerical data, encoded as a digital signal over a wireless data transmission 132, wherein the signal is relayed respectively to or from the device 130 by the geographically-closest communication link relay 134_{N} of a plurality 134₁₋₃ thereof. The plurality of communication link relays 134₁₋₃ allows digital signals to be routed between mobile devices 130 and their counterpart by means of a remote gateway 136. Gateway 136 is for instance a communication network switch, which couples digital signal traffic between wireless telecommunication networks, such as the network within which wireless data transmissions 132 take place, and the WAN 120.

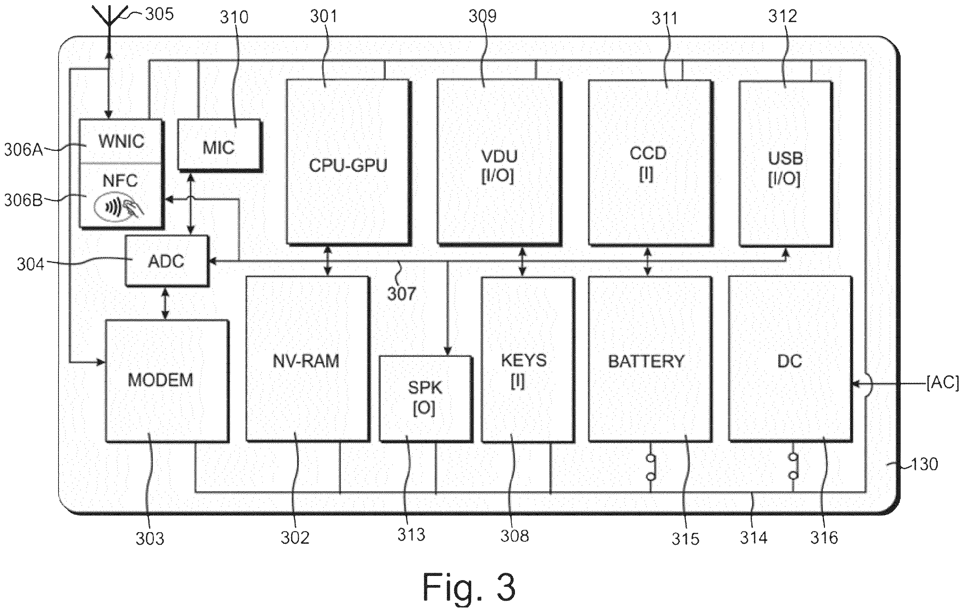

A typical hardware architecture of the mobile personal communication device 130 is shown in Figure 3 in further detail, by way of non-limitative example. The mobile device 130 firstly includes a data processing unit 301, for instance a general-purpose microprocessor, for instance conforming to the Cortex^{™} architecture manufactured by ARM^{™}, acting as the main controller of the data processing terminal 130 and which is coupled with memory means 302, comprising volatile random-access memory (RAM), non-volatile random-access memory (NVRAM) or a combination thereof.

The mobile device 130 further includes networking means. Communication functionality is provided by a modem 303, which provides the interface to external communication systems, such as the cellular telephone network shown in Figure 1, associated with or containing an analogue-to-digital converter 304, which receives an analogue waveform signal through an aerial 305 from the closest communication link relay 134 and processes same into digital data with the data processing unit 301 or a dedicated signal processing unit. Alternative wireless communication functionality is provided by a wireless network interface card (WNIC) 306A interfacing the mobile device 130 with any wireless local area network generated by a local wireless router 114. Further alternative wireless communication functionality is provided by a High Frequency Radio Frequency Identification (RFID) networking interface 306B implementing Near Field Communication (NFC) interoperability and data communication protocols for facilitating wireless data communication over a short distance with correspondingly-equipped devices.

The CPU 301, NVRAM 302 and networking means 303 to 306B are connected by a data input/output bus 307, over which they communicate, and to which further components of the mobile device 130 are similarly connected, in order to provide wireless communication functionality and receive user interrupts, inputs and configuration data. Accordingly, user input may be received from a data input interface 308, which for the mobile device 130 may be a keypad with a limited number of multi-functional keys and/or a capacitive or resistive touch screen feature of the display unit 309. Further input data may be received as analogue sound wave data by a microphone 310, digital image data by a digital camera lens 311 and digital data via a Universal Serial Bus (USB) 312. Processed data is output as one or both of display data output to the display unit 309 and audio data output to a speaker unit 313.

Power is supplied to the above components by the electrical circuit 314 of the mobile device 130 , which is interfaced with an internal battery module 315, which itself may be recharged on an ad hoc basis by an electrical converter 316.

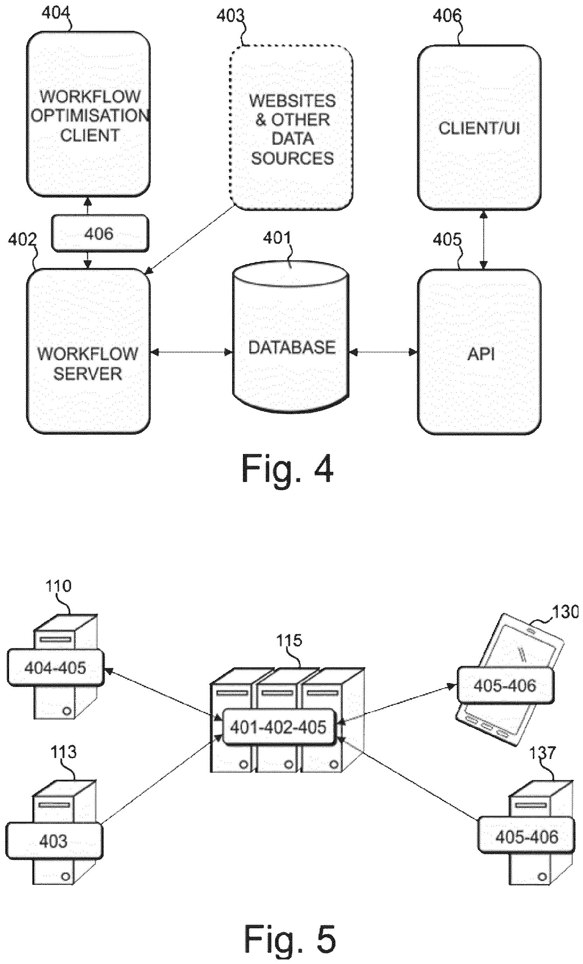

With reference to Figures 4 and 5 now, a data processing architecture is shown which comprises a database 401, a multithreaded workflow module 402 retrieving instrument data 403 from remote sources, a workflow optimization module 404, an interfacing application programmer interface 405 and a client module 406, all respectively stored and processed at network-connected terminals 110-137.

The database 401 is hosted for distribution across the networked system 100 by a scalable cloud storage and data processing facility, aggregately symbolized in the Figures by the server 115 and which, in a practical example, may be the Elastic Compute Cloud ('EC2') web service provided by Amazon.com^{™} Inc. of Seattle, Washington, United States of America. The database stores a plurality of data records organized in data tables, each table containing asset-holding instrument data as values representative of one or more quantitative and/or qualitative characteristics of each asset-holding instrument. Each data record includes at least a unique asset-holding instrument identifier for purposes of relating instrument-respective data across the various tables and, in at least one table, each data record further includes at least one network address associated with the asset-holding instrument, pointing to a remote network node 113 storing data 403 of the node-respective instrument(s).

The workflow server module 402 is hosted by the server 115, which periodically retrieves instrument-respective data 403 representative of tens of thousands of asset-holding instruments from online repositories of instruments issuers and providers, for example the respective websites and/or dataset outlets of entities like Bloomberg^{™}, HSBC^{™}, LYXOR^{™}, INVESCO^{™}, AMUNDI^{™}, and from trading exchanges such as the London Stock Exchange ('LSE'), all aggregately symbolized in the Figures by server 113. A prototype system is currently retrieving instrument data for 25,000 ETFs once a day, and the retrieved data structures and formats comprise text files, flat files, HTML, JSON, jsonlines, spreadsheets and PDF-formatted documents.

The retrieved data 403 is processed by the workflow server module 402 for performing automated integrity checks thereon and reconciling checked instrument-respective data with instrument-respective data stored in the database records. The workflow server module 402 thus either automatically updates instrument-respective data records in the database 401 with checked instrument-respective data or, should the automated integrity checks fail, or the retrieved data not be processed for any reason, submits the unprocessed retrieved data to the workflow optimization client module 404 processed by the server 110, for optimizing the processing parameters of the workflow logic 402.

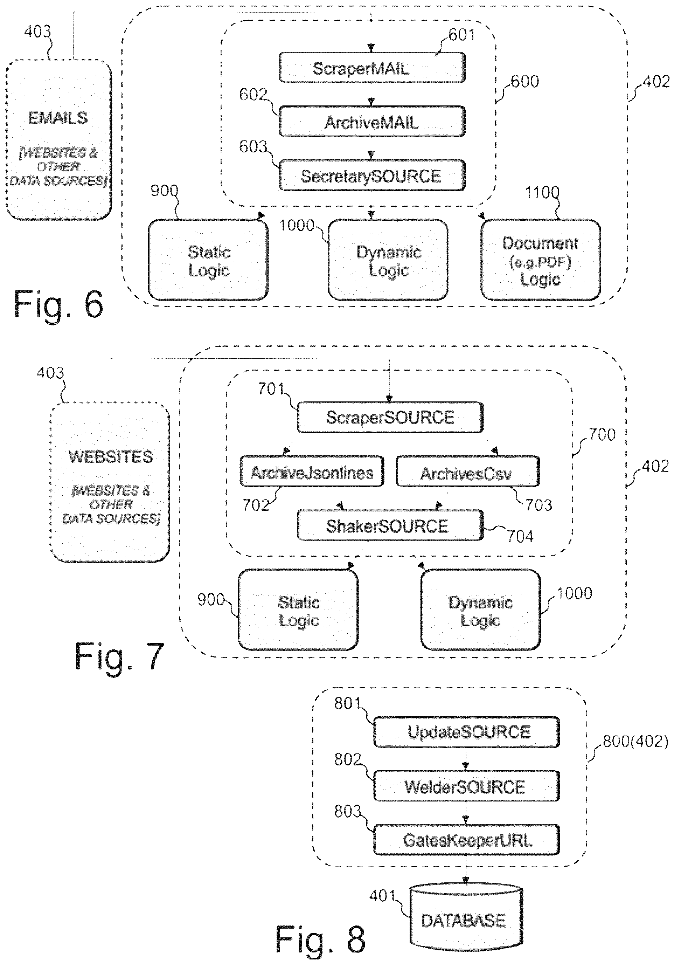

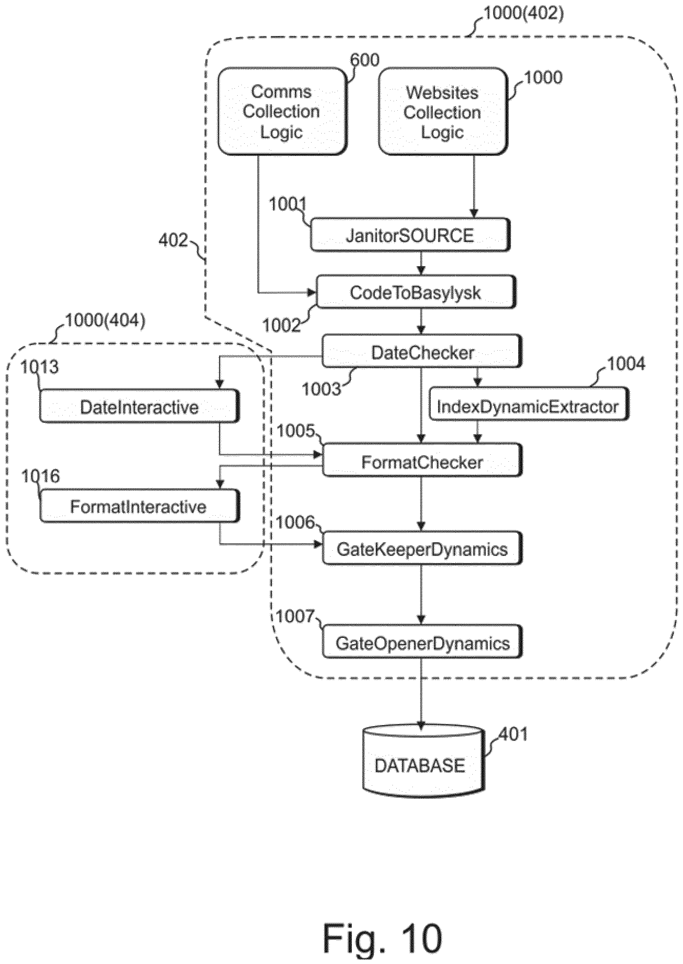

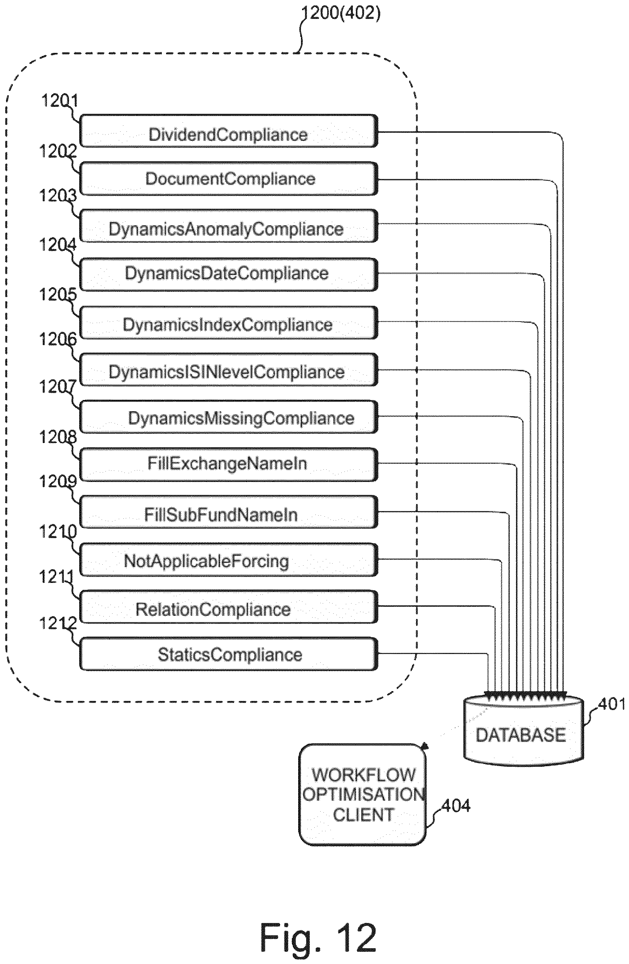

Artificial Intelligence (Al) and Machine Learning (ML) logic within the workflow module 402, described hereafter with reference to Figures 6 to 12, gradually speeds up both the retrieval of instrument data 403 and the data integrity checks, as that logic gets optimized through the workflow optimization client 404 over time.

The workflow optimization module 404 communicates with the API 405 interfacing the workflow module 402 and the database 401 to read database data and to manually intervene in the logic of the workflow module's integrity checks, with ad hoc user input, upon the retrieved data 403 unprocessed by the workflow module 402. On a next retrieval of third part data 403 that is substantially similar to this unprocessed data, the optimization through the module 405 should cause the workflow module 402 to process that third party data 403 successfully, without referral to the workflow optimization module 405.

In the example, the API 405 is a RESTful web service offering GET and POST methods via HTTP, implemented with the Flask library. A user of the workflow optimization module 404 at the server 110 initially requires authentication at the server 115, at which a security web service, for example the Amazon^{™} Route 53^{™} web service developed to securely connect user requests with infrastructure processed with its EC2 architecture, generates a security token. That token is then used for every request for the cognito server 115 through the API, wherein the requested resource is executed if the request is approved, and results in an error response under the 403 HTTP code otherwise.

The client module 406 is processed at each user terminal 130, 137, which also communicates with the API 405 to authenticate user access, store user preferences and, in ordinary use, receive API requests to retrieve instrument-respective data from the database 401 and locally output the retrieved data to one or more secure web user interfaces.

The respective functionalities of the workflow server module 402 and the workflow optimization module 404 are now described with reference to Figures 6 to 12 as a series of function-oriented data processing logics, each consisting of interdependent data processing modules.

The following syntax is adhered to throughout the following description of Figures 6 to 12. 'SOURCE' in the name of a module is used as a generic placeholder indicative of a respective third party online resource 113, e.g. SecretarySOURCE = SecretaryAMUNDI, SecretaryLSE, <etc.> ; shakerSOURCE = ShakerAMUNDI, ShakerLSE, <etc.>. 'Static data' corresponds to a dataframe with a first column named "index" containing unique identifiers of instruments, and at least a second column containing information data about the instrument referenced in the "index" column. The unique identifier of an instrument may be its International Securities Identification Number ('ISIN') or its Bloomberg^{™} ticker, being a unique identifier assigned by Bloomberg^{™} to identify a listing of an instrument and composed of the instrument ticker followed by the exchange codification (e.g. "8PDF GF"). 'Dynamic data' corresponds to a dataframe containing information about one field for a set of instruments on the date at which data is processed, with a first column containing unique identifiers of instruments and, in one or more further columns, the field, dates and information. 'Document' corresponds to a text file, a flat file, HTML code, JSON, jsonline, a spreadsheet, a PDF or the like, excluding images, that is published on the internet by instrument issuers and trading exchanges 113. 'Link' corresponds to a dataframe with a first column named "ISIN" containing unique identifiers of instruments in the ISIN format, and a second column named "URL" containing network addresses in the WAN120 (e.g. at the server 113) for documents respectively associated with the instruments.

A communications collection logic 600 processes electronic messages, typically emails, addressed by third party servers 113 to the workflow module 404 at the server 115. Within that logic, a ScraperMAIL module 601 extracts all messages that are not error-labelled, e.g. 'error source', 'error treatment'. A message gets labelled with 'error source' if the source of a message is unknown, and with 'error treatment' if the message cannot be downloaded or the Secretary module described hereunder cannot process it.

This scraper module needs a valid token from the Google^{™} open authentication process for connecting to the mailbox associated with the workflow module 404. The workflow module 404 thus needs to be registered as app with a Google^{™} app server and to download a secret file containing the respective identifier of the module, whence the authentication process outputs the token following a conventional two-step process.

After successfully downloading a message and retrieving its source, the module deletes the message. The module 601 outputs the message in raw format into an ArchivesMAIL module 602: the full body of the message is base64url encoded in the field "raw", and the message is saved in a json file with its source in the name, with one message per json file.

The ArchivesMAIL module 602 archives the raw-formatted messages and dispatches them to the SecretarySOURCE module 603 of their respective source. Each SecretarySOURCE module 603 decodes the message and parses all its parts, for detecting any attachment and/or network address, e,g. a PDF or ZIP file or a URL link, within the message body. Each Secretary module 603 processes detected attachments and network addresses to extract the file name and to forward the file to the workflow module logic corresponding to their nature.

Attached files that are PDF or ZIP^{™} compressed archives are retrieved and some information is gathered from their names. Unnecessary data is removed, statics data is extracted, some columns are formatted for future extraction, and dynamics data is extracts and cleaned. Each Secretary module 603 returns static data as a DataFrame and dynamics data as a GroupBy object grouped by fields. If an error occurs during the treatment of the data, the message is returned to the mailbox and labeled with 'error treatment'

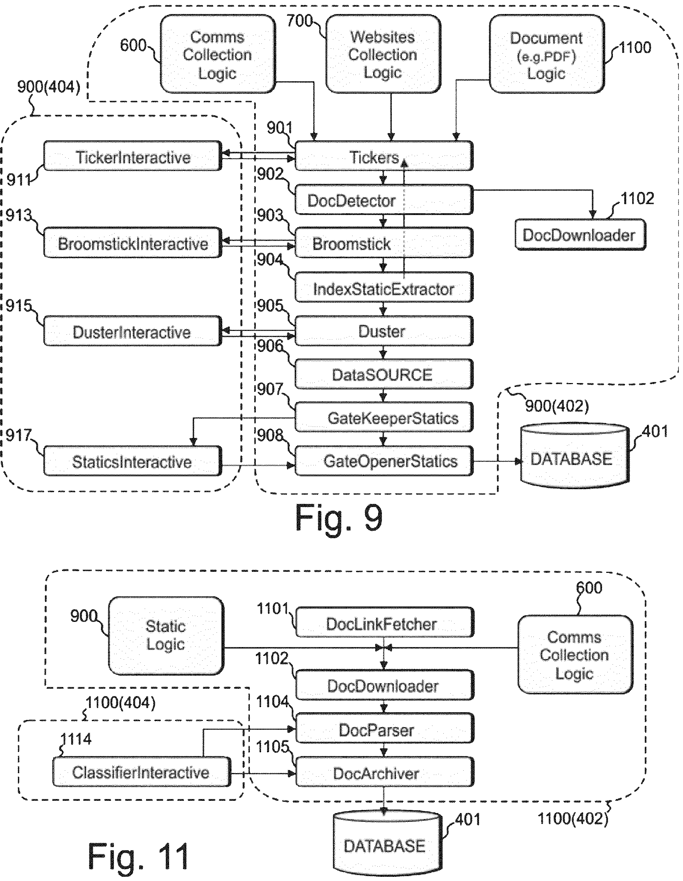

With reference to Figures 9, 10 and 11, each Secretary module 603 then outputs the static data to a Tickers module 901 of a static data processing logic 900, the dynamic data to a CodeToBasylysk module 1002 of a dynamic data processing logic 1000, and document data to a DocumentDownloader module 1102 of a document collection logic 1100, all further described hereunder.

A websites collection logic 700 processes raw data retrieved from third party websites hosted at remote servers 113. This logic is composed of 3 layers: scrapers retrieving data, archivers storing the retrieved data, and shakers segregating the archived data between statics, dynamics and historical data.

ScraperSOURCE modules 701 are periodically started to retrieve data. They access websites 403 of the instrument providers and trading exchanges, and collect both static data, occasionally including historical instrument data, and dynamic data for respective instruments present at a website. Depending on the website content, they may not all retrieve the same data. For example, the nav of an ETF, representing the value of all the securities held by that ETF, is retrieved from the website of that ETF's provider, whereas the closing day value of an ETF is retrieved from the website of the exchange on which it is traded.

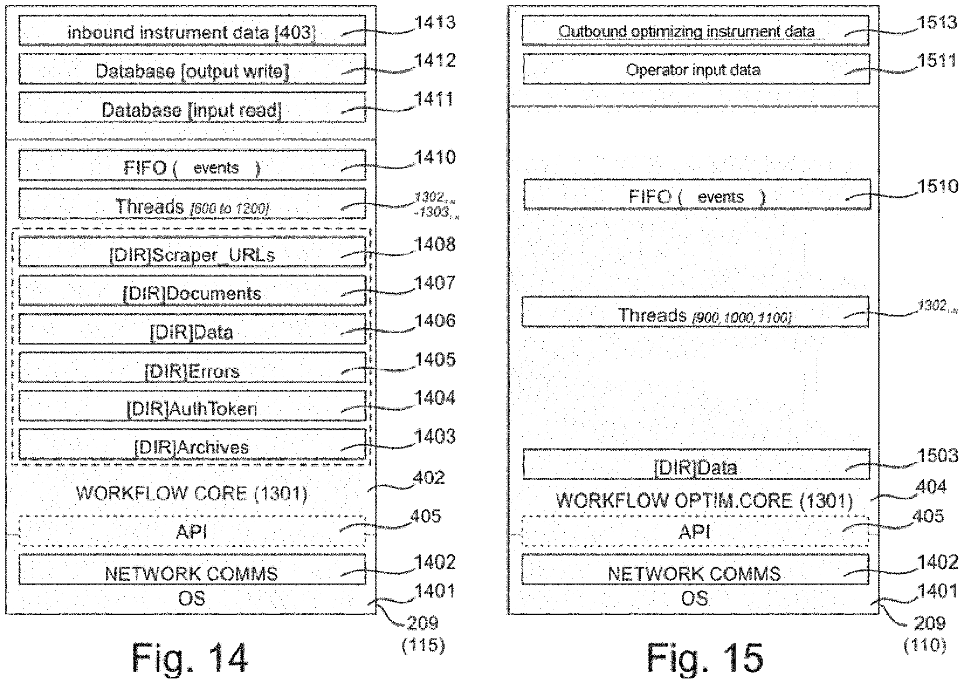

In general one scraperSOURCE module 701 is allocated per third party data source 113, but there might be multiple website for one source, for instance when a website is published in multiple languages. In another example, some trading exchanges justify several scraper modules 701 per website, because static data and dynamic data is stored at different, respective network addresses of the same website. Depending on the embodiment, each scraperSOURCE module 701 retrieves the URL network address of the website to scrape, either from the database 401 or, with reference to Figure 14, a directory of URLs in a secondary 'S3' storage provided at the server 115.

Upon completing the scraping function, each scraperSOURCE module 701 outputs a jsonlines containing the raw data (static, dynamic, historical) as retrieved, wherein every line is a json corresponding to one instrument, into an ArchiveJsonlines module 702. Some sources allow the ScraperSOURCE module to output a comma-separated values ('CSV') file in which raw static data and raw dynamic data is segregated, wherein CSV are output to an ArchivesCsv module 703 instead.

Each of the ArchivesJsonlines module 702 and the ArchivesCsv module 703 archives its respective input for later retrieval into the workflow, for example for debugging purposes. Neither modifies its input files, and transmits them to ShakerSOURCE modules 704 in the form received.

ShakerSOURCE modules 704 segregate the static data from the dynamic data in jsonlines files into respective CSV files. The segregated static data is sent to the Tickers module 901 module as one CSV file for all instruments per source. The segregated dynamic data, and historical data when present, is sent into a source-respective JanitorSOURCE module 1001 of the dynamic data processing logic 1000, as one CSV for all instruments per characteristic per source, e.g. one CSV for nav values, another CSV for day close values, etc.

A network addresses collection logic 800 deals with the lists of products in multiple formats from the websites. It is composed of 3 layers: updater modules retrieving data, welder modules rebuilding network address (e.g. URL) of third party data resources, and a GatesKeeperURL module adding rebuilt network addresses for the scrapers into the database 401 or the directory of URLs in the secondary 'S3' storage provided at the server 115.

UpdaterSOURCE modules 801 are designed to scrape specific pages of instrument providers' and trading exchanges' websites, for retrieving sufficient data to rebuild respective network addresses at which instrument data is accessed by scrapers 701. For example, if all stored URLs have the same form including an ISIN as a parameter, then the updater modules 801 should only output a list of ISINs and the next WelderSOURCE modules 802 can reconstruct the URL for each. These modules 801 also run periodically, e.g. at least once a day and early, to detect new instruments on websites early, even before such new instruments begin to get traded on exchanges.

Each UpdaterSOURCE module 801 outputs scraped data, the format of which can vary depending on the source 113, e.g. URLs as alphanumerical strings urls or a list of ISINs, to a same source-respective WelderSOURCE module 802. Each WelderSOURCE module 802 use the information given by the updaters 801 to rebuild the network address for every instrument, for which a data record exists in the database 401, and to output a CSV file with at least one column containing, for each row, the URL for one instrument of the source.

The CSV file generated by each WelderSOURCE module 802 is input to a GatesKeeperURL module 803, which compares URLs retrieved or built with the URLs stored in the database 401, and filters out duplicates so that only new URLs are written to the database 401, with a timestamp.

A static data processing addresses collection logic 900 processes raw static data to clean instrument names and values and write cleaned data to the database 401. Data processing irregularities detected during this sub-process are referred to the workflow optimization module 404 for user interaction.

A Tickers module 901 segregates known instruments stored in the database 401 from unknown instruments. A basylysk is a unique identifier for a listing of an instrument, which is assigned by and specific to the workflow of the invention: the data is duplicated by the Tickers module 901 to basylysks respectively associated with ISINs in the database 401, so that the final DataFrame contains only basylysks as index. Segregated data for known instruments is input to a DocumentDetector module 902, as a CSV with a column named "index" containing only known basylysks and several columns with information about the instruments. Segregated data for unknown instruments referenced by ISIN or by Bloomberg tickers is input to a Tickerlnteractive module 911 of the workflow optimization module 404, as a csv with a column named "index" containing only unknown ISIN or Bloomberg tickers and several columns with information about the instruments,

The Tickerlnteractive module 911 allows an operator to review and clean data about new instruments, so that it may be segregated as known instrument data on a next processing cycle. For new instruments referenced by a Bloomberg ticker unknown to the database 401, the user must clean the instrument data by assigning a basylysk to the instrument, for instance taking the format of the instrument's Bloomberg ticker with an underscore. In case of a new ISIN, the user may need to perform some investigating to determine why the instrument with that ISIN has no corresponding record in the database 401 yet. The Tickerlnteractive module 911 outputs manually-cleaned new instrument data back to the Tickers module 901.

The DocumentDetector module 902 detects every link to a document (e.g. a PDF file) inside any information columns, with simple comparison rules based on frequently-used expressions, to transmit these links with a respective ISIN to a DocumentDownloader module 1103 of a document collection logic 1100, as a CSV with 2 columns, URLs and respective ISINs. The DocumentDetector module 902 does not alter the CSV received from the Tickers module 902 and passes it on to the next Broomstick module 903.

The Broomstick module 903 cleans the name of each column received in the Tickers CSV file, by source to enhance the coherence of the static data. The cleaning takes the form of normalising information in the CSV, e.g. a variety of words and/or expressions with the same semantic meaning such as 'Domicile', 'Fund Domicile' 'Domicile of Fund' used for an instrument of a same source 113 (e.g. AMUNDI) are all normalised to 'domicile'. All columns with names successfully cleaned are output to an IndexStaticsExtractor module 904. All columns with names unsuccessfully cleaned are output to a Broomsticklnteractive module 913 of the workflow optimization module 404.

The Broomsticklnteractive module 913 allows an operator to review and clean unprocessed column data, so that it may be automatically cleaned (normalized) on a next processing cycle. The user can choose to ignore a new column, whereby that new column shall get ignored in the Broomstick module 903 and not be submitted for manual optimization again. Alternatively, if data in a new column corresponds to a field already present in the database 401, the operator cleans it manually (e.g. 'domicile of the fund' into 'domicile') so that a next occurrence of the same data will be automatically cleaned in the Broomstick module 903. The Broomsticklnteractive module 913 outputs manually-cleaned column data back to the Broomstick module 903.

The IndexStaticExtractor module 904 initially transforms all values in the static data into uppercase. If static data has already been extracted in an earlier module 901-903, empty values are removed and a column 'product type' is added with the value INDEX for each row. If static data has not been extracted yet, the module 904 attempts to generate two rows for each row already present in the DataFrame. A first row is for the instrument with the same index property as the input file, wherein values in any column representative of a benchmark are removed. In a second row, the index value is changed for the value corresponding to the benchmark Bloomberg ticker.

The value corresponding to the benchmark Bloomberg ticker can be retrieved from the database 401, by looking up the index in an 'Instruments' table based on the benchmark name property value sharing the instrument name property value. Alternatively, the module 904 can retrieve the value by looking up an 'InstrumentRelation' table in the database 401, which stores basylysks of instruments, based on the logic that the basylysk of the index for an instrument is usually identical to the Bloomberg ticker value of the index.

The module 904 output sent to the next module 905 is instrument static data split by type between ETF and ETP, and a secondary output is benchmark static data passed back to the Ticker module 901 for determining whether any one or more new or unknown instrument is still present in the data.

The Duster module 905 cleans values in the columns according to corresponding and relational values stored in the database 401, e.g. the normalized value 'domicile' in the file for the source 113 (e.g. AMUNDI) has a corresponding and relational value of 'LUXEMBOURG' in the database 401. The Duster module 905 output a CSV file with values cleaned to the next DataSOURCE module 906, and a CSV file with the original values unsuccessfully cleaned to a Dusterlnteractive module 915 of the workflow optimization module 404.

The Dusterlnteractive module 915 allows an operator to review and clean unprocessed column values, so that they may be automatically cleaned on a next processing cycle, on the basis of the basylysk of the instrument, the cleaned name of the property, the value unknown in the database 401, a boolean indicating whether the value is a new value and the clean(-ing) value if the operator needs to select it. The new cleaning parameters and the new values are then added to the database 401 and the module's output is relaunched into the Duster module 905 for a fresh cleaning attempt.

The DataSOURCE module 906 adds the instrument's source to the file, if it is not an index. If columns 'url_source' and 'ISIN' already exist in the input file, the module adds those directly into a table of network addresses stored in the database 401, with a data record of the ISIN and the URL. Alternatively, it creates a new column 'url_source' in the file, including the name of the source. In either case, the DataSOURCE module 906 then outputs the file to a GateKeeperStatics module 907.

The GateKeeperStatics module 907 retrieves all static data from the database 401, for the instrument(s) present in an input file, and then compares it to the data contents of the input files. Identical data is ignored, and data present in the file but not in the database is passed to a GateOpenerStatics module 908 for writing to the database 401. If there is no data for an ISIN level property in the database, but it has a value in the input file, the module 907 duplicates the data for each basylysk with the same ISIN. Any conflicts generated by the comparison in the module 907 are output to a StaticsInteractive module 917 of the workflow optimization module 404.

The Staticslnteractive module 917 allows an operator to review and resolve comparison conflicts, substantially on the same basis as the Dusterlnteractive module 915, of the basylysk of the instrument, the cleaned name and the cleaned value of the property, the corresponding value currently stored in the database 401, and a boolean value set to true if the value should be ignored in future processing cycles. For example in case of two source giving two different cleaned values for the same instrument of same property, the operator must determine which is the correct value and ignore the other. The conflict-resolving value inputs by the operator are then passed the GateOpenerStatics module 908.

The GateOpenerStatics module 908 writes the entire content of the input file into an 'instruments' table of the database 401. As the logic iterates, the 'instruments' table gradually stores clean values for clean properties linked to the right instruments by basylysk, not already stored in the database 401.

A dynamic data processing logic 1000 processes dynamic data by detecting incoherence in values and dates. It does so specifically for each type of data, and transmits them to the database 401. As with the static data processing logic 900, errors detected by modules of this dynamic logic are output to interactive modules of the workflow optimization module 404 for operation intervention.

JanitorSOURCE modules 1001 clean the dynamic data received from ShakerSOURCE modules 704 as CSV files with a single field. The Janitor modules 1001 normalize numbers and dates, and outputs a normalized CSV with "fields", "dates", "values" and "instruments" in the columns, wherein each instrument is represented as a column containing the information and labeled with the instrument name (ISIN or Bloomberg ticker), to a CodeToBasylysk module 1002.

The CodeToBasylysk module 1002 also receives dynamic data from secretarySOURCE modules 603, and detects if instruments in the input are ISINs coming from funds or Bloomberg tickers coming from trading exchanges. If an instrument is an ISIN, the module checks the 'instruments' table in the database 401 to get all the instruments linked to the ISIN. If the instrument is a Bloomberg ticker, the module cleans it. During this process, any unknown instruments and their respective information are removed from the DataFrame. After a cleaning process the DataFrame is reshaped in the correct format. The CodeToBasylysk module 1002 outputs a file with 4 columns, labeled "instruments", "dates", "fields" and "values", each containing information is in the standard format, to a DateChecker module 1003.

The DateChecker module 1003 detects anomalies in dates given for certain types of properties of instruments. The module verifies either data that is older than a predetermined period before the current date, or all the data present in the file relative to the current date. After this first filter, dates in the resulting file are processed by several filters, in the example "week-end", "before listing", "before inception", "future", accumulating errors if any are present. Each filter is applied to a specific list of fields, and the DateChecker module 1003 outputs a file with 4 columns, labeled "instruments", "dates", "fields" and "values", now containing checked dates, to an IndexDynamicExtractor module 1004.

Dates causing an anomaly relative to the filters are sent to a Datelnteractive module 1013 of the workflow optimization module 404, with an automated explanation of each anomaly based on the differential with the filter threshold, and at which an operator reviews and manually resolves each anomaly. The Datelnteractive module 1013 outputs a file with 4 columns, labeled "instruments", "dates", "fields" and "values", now containing checked dates resolved for anomalies, to the DateChecker module 1004.

The IndexDynamicExtractor module 1004 calculates rebased values for instruments. The module initially loads the 'Instrument Relation' table from the database 401. An index is selected in the table, corresponding to the date and the instrument in the DateChecker module 1003 output file. The value for a field "index rebased" in that file is usually different, relative to the corresponding value in the 'Instrument Relation' table. To solve, the module 1004 computes a linear correlation, after checking whether there is sufficient data stored in the database 401 for the instrument for that purpose. Assuming there is sufficient data, when the correlation between the database value and the file value exceeds 0.99, the module 1004 computes a ratio between the database value and the file value, then divides the file value to scale for the database, and outputs the computed values to the next module 1005. Otherwise, the module 1004 resets and waits for more data for the instrument. Alternatively, the module 1004 checks whether another instrument associated with the same index has more data available for a correlation computation, and selects this instrument to compute the rebased value.

The FormatChecker module 1005 receives data in a correct format with the correct indexes from the DateChecker module 1003, and processes values received for each field of each instrument separately. It applies four verifications to the value data, depending on the field: a check of whether values received are negative, or not; a check of whether values received are zero values, or not; a check of whether values received are in a range previously fixed in the workflow configuration ; and a check of whether values received deviate from values stored in the database by a percentage predetermined in the workflow configuration. The module 1005 outputs cleaned data for comparisons in the next GateKeeperDynamics module 1006.

The GateKeeperDynamics module 1006 checks all the instruments, fields and min/max dates received from the FormatChecker module 1005. It loads a corresponding database table from the database 401, compares the input data with same, and then passes lines that are not stored in the database 401, deletes lines that are the same value, and blocks lines that have a different value. When the difference between two values is less than 0.1% of the new value, the value with the highest precision is retained, wherein the precision criterion is assessed by reference to the position of the comma in the value formatted in string, regardless of whether that value is the input file value or the database-stored value.

The GateOpenerDynamics module 1007 receives only data ready to be written to the database 401 from the From GateKeeperDynamics: module 1006, as a temporary database table which is the mirror of the corresponding table in the database. The functionality of the library SQLAIchemy^{™} is invoked by the module 1007 to execute a merge and join between the tables, to avoid duplicates.

A document processing logic 1100 processes document files, typically but not exclusively in the PDF format. This logic acquires document network addresses, e.g. URLs as an input, resulting in retrieving and storing metadata of each document file in the database 401 and automatically downloading the documents with a human verification in the workflow optimization module 404.

A DocumentLinkFetcher module 1101 uses the Google^{™} search engine to locate URLs that may point to documents. The module fetches ISINs from the database as an input, for example as a CSV file with a unique column "ISIN" containing ISINs as values, then executes Google^{™} searches for each ISIN based on a predefined query template, for example "<ISIN> KIID filetype:pdf" and/or "<ISIN> FACTSHEET filetype:pdf". After gathering the URLs returned by the search engine, a filter is applied to remove URLs already stored in a 'Documents' table of the database 401. The DocumentLinkFetcher module 1101 outputs a CSV file with 2 columns containing ISINs and respective URLs.

A DocumentDownloader module 1102 considers all the network addresses received in input from the DocumentLinkFetcher module 1101, the DocumentDetector module 902 and the SecretarySOURCE modules 693 and downloads the content at the endpoint if at least one of the following conditions is respected: The URL does not appear amongst the known URLs in the Documents table of the database ; the execution time of the module is defined as a "FULL_DOWNLOAD_DAY" for the module "DocumentDownloader" in the workflow configuration. For any of the URLs, if the "Content-Type" of the HTTP response is an "application/pdf', the module also saves the metadata of the PDF in the 'Documents' table if the URL does not appear amongst the known URLs in the Documents table of the database ; or, if the URL appears the table, the file size is different. For any of the URLs still, if an URL has an ISIN value in the same row of the CSV, a record is also be saved in a "DocumentISIN" table to link the PDFs to the associated ISIN. Then, every new PDFs that has a new record in the database is sent to the next module 1104.

A DocumentParser module 1104 extracts the text of downloaded documents input to it and detects the following information: document language, document type, document date and ISIN(s) in the document. Language, type and date data are written to the "Documents" table of the database. ISINs that are recognized in the text are added, only if a relation between the document and ISIN(s) therein does not already exist in the "DocumentISIN" table.

When the module 1104 fails to extract any of the four types of information, the downloaded document is sent to a Classifierlnteractive module 1114 of the workflow optimization module 404, at which an operator reviews the document to determine the ISINs, the language, the type and/or the issuing date, and manually inputs the unresolved information. Language, type and date data are again written to the "Documents" table of the database, likewise ISINs are added only if a relation between the document and ISIN(s) therein does not already exist in the "DocumentISIN" table.

A DocumentArchiver module 1105 then write a copy of the downloaded document (e.g. PDF) in the Document storage defined by the "document_directory" configuration of the workflow module 402.

A data compliance logic 1200 of the workflow module 404 audits instrument data stored in the database 401 as a result of the updating activity performed by the various logics 600-1100, for continuing compliance with rulesets and parameters embodying various statutory and security requirements that bracket the existence and trading of instruments outside of technical considerations.

Each module of this logic thus has no input from the various logics 600-1100 described heretofore, instead it periodically accesses and processes instrument data stored in the database 401, updates the database 401 directly with any new data, and again refers errors to the workflow optimization module 404 for operator intervention through a compliance user interface.

Throughout the present description, "awake" is a Boolean property of an instrument wherein, if the value for a specific instrument is 1, this instrument will be considered in this compliance branch, besides the interactive modules of the workflow optimization module 404.

A DividendCompliance module 1201 initially deletes data that has been generated during previous executions. The module then fetches basylysks of awake instruments, the type of which is not "INDEX". For each fetched record, the module 1201 checks whether there's an inception date; whether there is no data hole in the frequency of dividends distribution; whether there are too many dividends relative to the frequency of dividends distribution; whether there is a distribution only when the distribution policy is "distributing"; and finally whether each listing has the same dividend.

A DocumentsCompliance module 1202 initially deletes data that has been generated during previous executions. The module then fetches basylysks of awake instruments, then ISINs corresponding to those basylysks. The module then retrieves documents affected to different instruments and, for each ISIN, if the document is a factsheet, the module checks whether the factsheet is older than 0 days; and whether the previous factsheet in date is not older than 40 days. Alternatively, if the document is a Key Information Document ('KIID'), the module checks whether the KIID exists; and whether the previous KIID in date is not older than 385 days. Alternatively still, if the document is a prospectus, the module 1202 checks whether the prospectus is older than 0 days and whether the previous prospectus in date is not older than 385 days. For each document affected to different Instruments, the module lastly checks whether they have the same source.

A DynamicsAnomalyCompliance module 1203 initially deletes data that has been generated during previous executions. The module then fetches basylysks of awake instruments and, for each instrument data field audited by this module, it checks that there is no close/volume value after the instrument delisting date; it detects value difference within 20% between two days; it detects values out of [1; 50000]; and it detects both null and negative values.

A DynamicsDateCompliance module 1204 initially deletes data that has been generated during previous executions. The module then fetches basylysks of awake instruments and, for each instrument data field audited by this module, it detects date values on week-end and future date values.

A DynamicslndexCompliance module 1205 initially deletes data that has been generated during previous executions. The module then fetches basylysks of awake instruments, the type of which is "INDEX". For each fetched record, the module 1201 then retrieves all "close" and "rebased" dynamic data. The "rebased" dynamic data is ignored if there is at least one "close" value for the instrument. The module then detects any data holes within a 4-day period. This module updates the database 401 if there is a missing listing date (for a "closed" case) or a missing inception date (for "rebased" case). Finally, the module checks whether each detected data hole is a predetermined period before the current date, e.g. 5 to 12 days, and only updates the database 401 with the data hole if the data hole is beyond this range.

A DynamicslSINLevelCompliance module 1206 initially deletes data that has been generated during previous executions. The module then fetches ISINs of instruments, the type of which is either "ETP" or "ETF". The module then fetches basylysks of awake instruments corresponding to such ISINs, and checks whether they all have the same values for the same field and same date.

A DynamicsMissingCompliance module 1207 initially deletes data that has been generated during previous executions. The module then detects whether any data holes have user-deselected in the compliance user interface of the workflow optimization module 404, wherein deselected data holes are deleted in the database. For each field (nav, close, etc.), then for each basylysk where the product type is not "INDEX", this module then determines whether field data (nav, close, etc.) has user-deselected in the compliance user interface. If no field data has been user-deselected, the module then checks whether there are any data holes within a 4-day period, and ignores data holes after the delisting date for the fields "close" and "volume". The module next checks whether there is any missing listing date for "close" and "volume" fields), or any missing inception date for the other fields. The module next checks whether there is any data hole within the last 7 days for a specific field, and lastly checks whether there is no data hole in the previous month after a specific due date.

A FillExchangeNameln module 1208 updates the database with assigning an exchange name to an instrument missing this value, based on the basylysk. A FillSubFundNameln module 1209 is active when the database 401 gets updated and detects awake instruments of the ETF or ETP type missing a fund name value, and updates the database with assigning a fund name. A NotApplicableForcing module 1210 determines, for each instrument property, when a property should have a "not applicable" ('N/A') value for a particular instrument product type, and updates the property in the database accordingly, on every first determination for an instrument property. A RelationCompliance module 1211 checks whether an index is affected by an ETF or ETP instrument when a relation in the database mentions it. If this detection passes, this module checks possible data holes when the ETF or ETP instrument is not related to an index. Finally, the module checks whether each listing related to an ISIN has the same amount of index relations.

A StaticsCompliance module 1212 initially deletes data that has been generated during previous executions. The module checks for null values in records that should not contain same; checks date values against min/max thresholds; checks whether there are different values on ISIN level properties amongst different listings ; and checks whether instrument properties match rulesets about single share class, primary share class, inception dates, delisting date, currency class, currency hedge and distribution policy.

The workflow logic 402 also comprises logic modules to call the API 405 for distributing database content to the client module 406.

An ApiSendPdfNotification module sends email messages to users at client terminals 130, 137 that are subscribed to a document notification function. This module fetches all users from a "user" table of the databasde 401 with a "has_pdf_notification_mail" parameter set to TRUE. For each fetched user, the module picks up the ISINs related to it from an "APIUserlsinAccess" table. With this user-respective list of ISINs, the module checks whether any document in the "Documents" table that has a "validation_date" parameter within the previous day of the execution time of the module. The module stops for the user-respective list under consideration, if it has already sent a message to the corresponding user on the current day. Alternatively the module sends an email message to the corresponding user, for subscribed ISINs with new documents having a "validation_date" to the previous day.

An ApiSendEventNotification module sends email messages to users at client terminals 130, 137 that are subscribed to an event notification function. This module again fetches all users from a "user" table of the databasde 401 with a "has_event_notification_mail" parameter set to TRUE. For each fetched user, the module picks up the ISINs related to it from the "APIUserlsinAccess" table. With this user-respective list of ISINs, the module checks whether there was any dynamic data (e.g. dividend and split) in the "Dynamics" table that has a "sys_dates" value within the previous day of the execution time of this module. The module stops for the user-respective list under consideration, if it has already sent a message to the corresponding user on the current day. Alternatively the module sends an email message to the corresponding user, for subscribed ISINs with new dynamic data having a "sys_date" to the previous day.

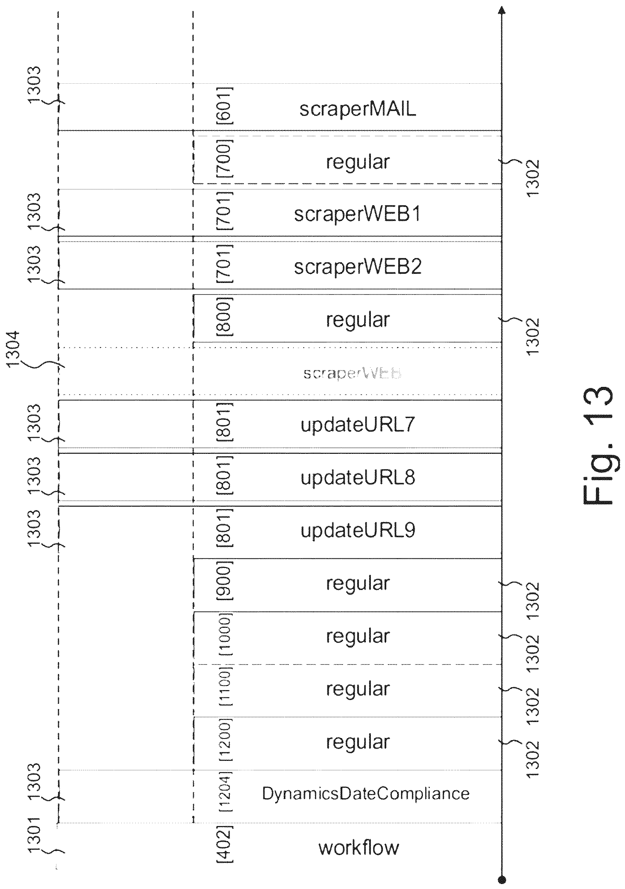

In practice, with reference to Figure 13, the logics 600 to 1200 described hereinbefore are embodied as concurrently-processed data processing threads, wherein the instantiation and management of all threads is performed by a core logic of the workflow module 402. Threads under the control of the core logic, shown as a master thread, include both regular threads 1302, which process retrieved data waiting to be allocated a module of a logic, and data-scraping threads 1303, which retrieve data periodically, e.g. at least once daily.

The master thread 1301 initializes both types of threads, regular and scraper. After this initializing, the master thread controls child threads and sub-threads, and is configured to stop or start a regular thread, add or remove a scraper thread, and status inform about alive threads. The master thread 1301 removes any thread or sub-thread which is not alive anymore wherein any removal of a thread removes sub-thread initialized therewith.

The or each regular thread 1302 regularly scans files that are waiting for treatment in active modules that are not associated with a scraper thread. When such a file is found, a module object is initialized with the content of the file and the process function of the module is executed. The "Module" class is composed of a set of attributes and functions that are useful to develop the process function of a module: for example, when a regular thread 1302 detects a file to process for the module "ArchivesCsv", it instantiates an object of the class with the same name, e.g. module.ArchivesCsv. Every class defined in the workflow definition as a module should inherit the Module class and implement the process function. After checking all the modules, the or each regular tread executes a wait for a predetermined period, e.g. a few seconds, then resumes.

The logic is configured to have several scraper threads 1303 executing in parallel, wherein a queue is initialized and used by all the scraper threads. If an event is registered to this queue, the first scraper thread available locks the event and processes the scraper module, e.g. the ScraperMAIL 601, corresponding to the locked event. If a second event is registered to the queue whilst the first scraper is still processing the scraper module for the previous event, another inactive scraper thread 1303 locks the second event and processes the scraper module, e.g. the ScraperHSBC 701, corresponding to the locked event. This configuration facilitates parallel scraping processes. Scraping a website is a relatively long process that does not require much computing power. Being able to scrap several sources 113_{1-N} at the same time makes the whole scraping process flexible without flooding the physical resources of the server 115.

With reference to Figure 14 now, wherein like numerals reference like features, the contents of the memory means 209 of the server 115 are shown at runtime, which initially include an operating system is shown at 1401, for instance Windows 10^{™} distributed by Microsoft^{™} Inc. of Redmond, Washington, USA. The OS 1401 includes instructions for governing the basic data processing, interdependence and interoperability of the computer hardware components as described with reference to Figure 2, and communication subroutines 1402 to configure the server 115 for bilateral network communication via the NIC 211 interfaced with the wired connection 112 to the local router 114. The OS 1401 also includes input subroutines for reading and processing input data variously consisting of user direct input to human interface devices, namely the keyboard 203 and computer mouse 204.

A set of instructions is shown next, which embodies the workflow module 402 and threads 1301, 1302, 1303 thereof as described hereinbefore. The set of instruction 402 is interfaced with the (local or remote) database 401, the remote workflow optimization module 404 at server 110 and the remote data sources 113 through the OS 601 via one or more Application Programmer Interfaces (API), including the API 405.

Several storage directories are shown next, that are respectively used by modules processed in respective threads 1302, 1303 for buffering and/or archiving instrument data required by module-respective functions, until the retrieved instrument data 403 has been cleaned for updating the database 401. An "ARCHIVES" directory 1403 contains the output of the different scraper modules in a raw format. An "AUTH" directory 1404 contains tokens related to any required authentication. A "BUG" directory 1405 contains files that cause a processing exception. A "DATA" directory 1406 contains files that are being processed in a thread 1302, 1303. A "DOCUMENT" directory 1407 contains document files (e.g. PDF) that are processed. A "SCRAPER_URLS" directory 1408 contains network addresses, typically URLs, that have been scraped for the last scraping of each source 113. These storage directories are shown in the memory 209 for purposes of completion of description, but may instead be instantiated at a remote server (denoted in the figure by a dashed line box), for instance as directories of an Amazon^{™} S3 bucket at a second EC2 server 115, and interfaced with the set of instructions 402 via the API 605.

A buffer, in the example configured as a First-In-First-Out buffer, is shown at 1410, which embodies the queue to which files and event are registered, for assignment to and processing by a thread 1302, 1303 as described with reference to Figure 13.

Further local data 1411, 1412 and network data 1413 may be stored in the memory means 209 at runtime, some or all of which may be processed by the workflow 402 and sub-routines thereof. Examples of further local data include for instance database data 1411 read by a logic module (e.g. 904, 1002) for comparison against retrieved and processed or partially-processed instrument data 403, cleaned instrument data 1412 output by a module (e.g. 803, 908) to write-update the database 401. An example of network data 1413 is for instance instrument data 403 being retrieved by a scraping module (e.g. 601, 701) from a remote source 113.

With reference to Figure 15, wherein like numerals reference like features relative to Figure 14, the contents of the memory means 209 of the operator terminal 110 are shown at runtime, which again include an OS shown at 1401 and communication subroutines 1402. The OS 1401 still includes input subroutines for reading and processing input data variously consisting of user direct input to human interface devices, namely the keyboard 203 and computer mouse 204, required for an operator to interact with the workflow optimisation module 404.

A set of instructions is shown next, which embodies the workflow optimization module 404 and threads 1301, 1302 thereof. The workflow optimization module 404 does not instantiate scraper threads 1303, only regular threads 1302 corresponding to the Tickerlnteractive module 911, the Broomsticklnteractive module 913, the Dusterlnteractive module 915, the Staticslnteractive module 917, the Datelnteractive module 1013, the Classifierlnteractive module 1114, and any other module provided to help optimize aspects of the automated workflow 402.

The set of instruction 404 is interfaced with the (local or remote) database 401, the remote workflow module 402 at server 115 via one or more Application Programmer Interfaces (API), including the API 405.

At least one local storage directory 1503 is shown next, which is used by operator-interactive modules processed in respective threads 1302 for buffering and/or archiving instrument data causing errors that is forwarded by the remote workflow module 402 at server 115 for operator optimization.

A buffer, in the example configured as a First-In-First-Out buffer, is shown at 1510, which embodies the queue to which files and event are registered, for assignment to and processing by a thread 1302.

Further local data 1511 and network data 1513 may be stored in the memory means 209 at runtime, some or all of which may be processed by the workflow optimizer 404 and subroutines thereof. In particular, further local data includes alphanumerical and selection data respectively input by the operator through the keyboard and mouse 203, 204 to effect selection choices and value adjustments. Network data 1513 is for instance corrected data or processing parameter returned to a module (e.g. 901, 903, 1005) of the remote workflow module 402 at server 115.

The present invention thus provides a distributed data processing architecture, implementable in a networked system of data processing terminals, for automating substantially all aspects of the collection, cleaning and reconciliation of asset-holding instrument data, then distributing clean and up-to-date asset-holding instrument data to users 130, 137. The architecture automatically sources and retrieves a wide variety of instrument-respective data structures and formats, in aggregate hundreds of millions of data points (including hundreds of thousands of documents), through scraping on a daily basis, which are then automatically processed, aggregated and reconciled.

Intervening in, and overriding, aspects of the logics 600-1100 which fail to process instrument data automatically, besides analyzing human-only interpretable errors, is both facilitated and accelerated with, over time, ever less intervention required as the models underpinning the processing get progressively more affined. With minimal human intervention, and eventually - potentially- none, errorless data flows straight into the database 401 to facilitate analytical, modelling and research frameworks.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A multi-threaded data processing architecture for distributing asset-holding instrument data across a network, comprising
a database storing a plurality of data records, each data record representative of a respective asset-holding instrument, each data record comprising at least a unique asset-holding instrument identifier and at least one network address associated with the asset-holding instrument, the database further storing a plurality of data structures with values representative of quantitative and/or qualitative characteristics of each asset-holding instrument;
at least one workflow thread configured to instantiate and control a plurality of data processing threads, comprising
data scraping threads instantiated to retrieve asset-holding instrument data selected from
(i) static, dynamic and/or historical asset-holding instrument data stored at a network-connected resource corresponding to the network address stored in the data record of a respective asset-holding instrument,
(ii) one or more electronic mail messages stored at and downloaded from a network-connected mail server,
(iii) a specific page or document stored at the network-connected resource corresponding to the network address stored in the data record of the respective asset-holding instrument,
(iv) instrument value data stored in the database; and
regular threads instantiated to process the retrieved asset-holding instrument data, associate the processed data with one or more unique asset-holding instrument identifier(s), and update the respective database data record corresponding to the or each unique asset-holding instrument identifier; and
at least one authenticated client module to which database data records are distributed.

2. A system for distributing asset-holding instrument data, comprising
a network of data processing terminals, wherein
at least a first terminal stores a database having a plurality of data records, each data record representative of a respective asset-holding instrument, each data record comprising at least a unique asset-holding instrument identifier and at least one network address associated with the asset-holding instrument, the database further storing a plurality of data structures with values representative of quantitative and/or qualitative characteristics of each asset-holding instrument;
the first terminal processes at least one workflow thread configured to instantiate and control a plurality of data processing threads, comprising
data scraping threads instantiated to retrieve asset-holding instrument data selected from
(i) static, dynamic and/or historical asset-holding instrument data stored at a remote second terminal corresponding to the network address stored in the data record of a respective asset-holding instrument,
(ii) one or more electronic mail messages stored at and downloaded from the remote second terminal or another,
(iii) a specific page or document stored at the remote second terminal corresponding to the network address stored in the data record of the respective asset-holding instrument, and
(iv) instrument value data stored in the database; and
regular threads instantiated to process the retrieved asset-holding instrument data, associate the processed data with one or more unique asset-holding instrument identifier(s), and update the respective database data record corresponding to the or each unique asset-holding instrument identifier; and
at least a remote third terminal processes a client module authenticated at the first terminal, to which database data records are distributed.

3. A data processing method for distributing asset-holding instrument data across a network, comprising the steps of
storing a database having a plurality of data records, each data record representative of a respective asset-holding instrument, each data record comprising at least a unique asset-holding instrument identifier and at least one network address associated with the asset-holding instrument;
storing a plurality of data structures with values representative of quantitative and/or qualitative characteristics of each asset-holding instrument in the database;
instantiating and controlling a plurality of data processing threads with a workflow thread;
retrieving asset-holding instrument data selected with one or more instantiated data scraping threads, wherein the data selected from
(i) static, dynamic and/or historical asset-holding instrument data stored at a remote terminal corresponding to the network address stored in the data record of a respective asset-holding instrument,
(ii) one or more electronic mail messages stored at and downloaded from a mail server,
(iii) a specific page or document stored at a remote terminal corresponding to the network address stored in the data record of the respective asset-holding instrument, and
(iv) instrument value data stored in the database;
processing the retrieved asset-holding instrument data, associating the processed data with one or more unique asset-holding instrument identifier(s), and updating the respective database data record corresponding to the or each unique asset-holding instrument identifier with instantiated regular threads;
authenticating access to at least one remote client module ; and
distributing data records of the database to the or each authenticated remote client module.

4. A computer program product for distributing asset-holding instrument data across a network of data processing terminals, wherein the computer program product is executable by at least a first terminal and configures same to-
store a database having a plurality of data records, each data record representative of a respective asset-holding instrument, each data record comprising at least a unique asset-holding instrument identifier and at least one network address associated with the asset-holding instrument;
store a plurality of data structures with values representative of quantitative and/or qualitative characteristics of each asset-holding instrument in the database;
instantiate and control a plurality of data processing threads with a workflow thread; retrieve asset-holding instrument data selected with one or more instantiated data scraping threads, wherein the data selected from
(i) static, dynamic and/or historical asset-holding instrument data stored at a remote terminal in the network corresponding to the network address stored in the data record of a respective asset-holding instrument,
(ii) one or more electronic mail messages stored at and downloaded from a remote terminal in the network configured as a mail server,
(iii) a specific page or document stored at a remote terminal in the network corresponding to the network address stored in the data record of the respective asset-holding instrument, and
(iv) instrument value data stored in the database;
process the retrieved asset-holding instrument data, associate the processed data with one or more unique asset-holding instrument identifier(s), and update the respective database data record corresponding to the or each unique asset-holding instrument identifier with instantiated regular threads;
authenticate access to at least one remote client module processed at one or more remote terminals in the network; and
distribute data records of the database to the or each authenticated remote client module.
